# NEUE EUROPÄISCHE PATENTSCHRIFT

(11) **EP 2 616 379 B2**
(45) Veröffentlichungstag und Bekanntmachung des Hinweises auf die Entscheidung über den Einspruch: **12.08.2020**
(45) Hinweis auf die Patenterteilung: 04.06.2014
(21) Anmeldenummer: 12709860.6
(22) Anmeldetag: 15.03.2012
(51) Int. Cl.: B66C 13/12, B60L 5/38, B60M 1/30, B66C 19/00, B60L 5/08

(54) **STROMABNEHMERSYSTEM, KRANANLAGE UND VERFAHREN ZUM ZUSTELLEN EINES STROMABNEHMERWAGENS ZU EINER STROMSCHIENE**
CURRENT COLLECTOR SYSTEM, CRANE SYSTEM, AND METHOD FOR ADVANCING A CURRENT COLLECTOR CARRIAGE TO A POWER RAIL
SYSTÈME COLLECTEUR DE COURANT, SYSTÈME DE GRUE ET PROCÉDÉ PERMETTANT DE FAIRE AVANCER UN CHARIOT COLLECTEUR DE COURANT SUR UN RAIL CONDUCTEUR

(30) Priorität: 31.03.2011 DE 102011001712
(43) Veröffentlichungstag der Anmeldung: 24.07.2013
(73) Patentinhaber: Conductix-Wampfler GmbH, 79576 Weil am Rhein-Märkt (DE)
(72) Erfinder: MAIER, Bernd, 79418 Schliengen (DE); KREITER, Frank, 79429 Malsburg-Marzell (DE); SÄTTELE, Jörg, 79688 Efringen-Kirchen (DE); BRANDER, David, 79540 Lörrach (DE)
(74) Vertreter: Charrier Rapp & Liebau
(86) Internationale Anmeldenummer: PCT/EP2012/054589
(87) Internationale Veröffentlichungsnummer: WO 2012/130630

(56) Entgegenhaltungen:
- WO-A2-2010/054852
- DE-U1- 9 110 687
- JP-A- 4 256 609
- JP-A- 2009 242 101
- "Hütte, Ausgabe 1996", 1996, Springer Verlag ISBN: 3-540-58740-3 pages K44-K48,

## Beschreibung

Die Erfindung betrifft ein Stromabnehmersystem nach dem Oberbegriff des Anspruchs 1, eine Anlage, insbesondere Krananlage, nach dem Oberbegriff des Anspruchs 8 und ein Verfahren zum Zustellen eines Stromabnehmerwagens zu einer Stromschiene nach dem Oberbegriff des Anspruchs 9.

Aus der WO 2010/054852 A2 ist ein Stromabnehmersystem für ein Fahrzeug, insbesondere für Containerstapelkrane bekannt. Das bekannte Stromabnehmersystem wird am Standbein des Krans befestigt und ist entlang einer Trasse verfahrbar, an der mindestens eine Stromschiene angeordnet ist. Ein Abnehmerwagen des Stromabnehmersystems kann über einen Stromabnehmer mit der Stromschiene elektrischen Kontakt herstellen, wobei der Abnehmerwagen hierzu über einen in horizontaler Richtung verfahrbaren Teleskoparm an eine Einführungseinrichtung der Trasse heranfahrbar ist. Der Abnehmerwagen ist in vertikaler Richtung frei verschieblich an einer Führung am Teleskoparm gelagert. Hierdurch können Stromabnehmerkontakte des Stromabnehmers mittels der Einführungseinrichtung in vertikaler Richtung an die Stromschiene herangeführt werden, um einen elektrischen Kontakt mit der Stromschiene herzustellen.

Die frei bewegliche Lagerung des Abnehmerwagens weist den Nachteil auf, dass zum Heranführen des Stromabnehmers und der Stromabnehmerkontakte an die Stromschiene eine aufwendige Einführungsvorrichtung vorgesehen werden muss, die viel Platz benötigt.

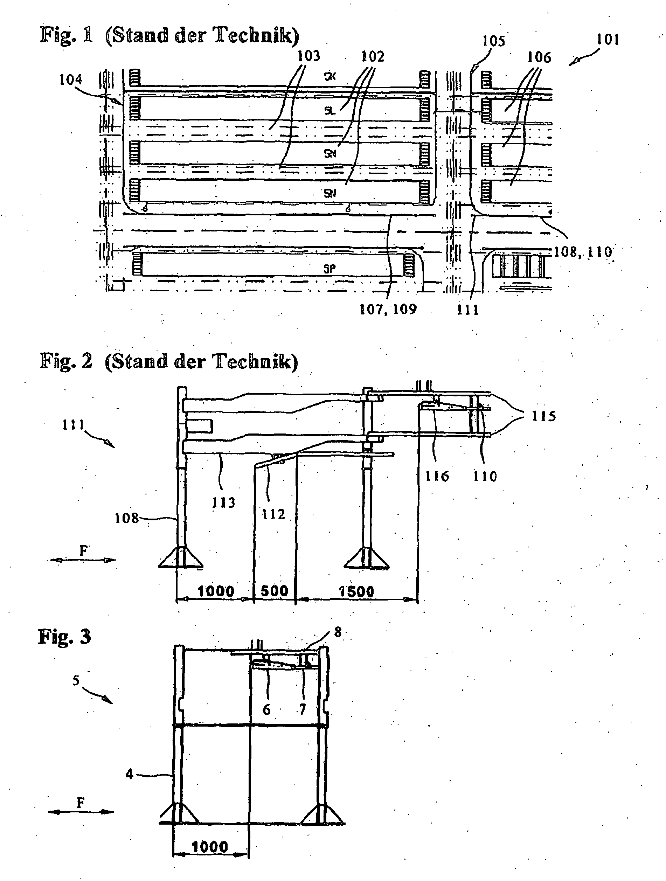

Dies wird exemplarisch anhand eines in Fig. 1 in schematischer Draufsicht gezeigten bekannten Containerumschlagplatzes 101 beschrieben. Solche Containerumschlagplätze 101 finden sich vor allem zum Umschlagen von Containern von Schiffen auf Lastwagen in einem Hafen. Container werden dabei in einer Vielzahl von länglichen Containerstapeln 102 gestapelt. Zwischen den Containerstapeln 102 befinden sich Fahrgassen 103 für Lastwagen, welche über nicht gezeigte Containerstapelkräne be- und entladen werden. Die Containerstapelkräne verfahren dabei in eine Fahrrichtung F entlang der Containerstapel 102 und reichen quer zur Fahrrichtung über eine Vielzahl von Containerstapel 102. Die Containerstapelkräne können dabei auch von einem Block 104 von Containerstapeln 102 zu einem anderen Block 105 von Containerstapeln 106 verfahren.

Zur Versorgung der Containerstapelkräne mit elektrischer Energie befinden sich entlang der Blöcke 104 bzw. 105 in Fahrtrichtung F verlaufende Trassen 107, 108 mit daran angeordneten Stromschienen 109, 110, die mit Stromabnehmern der Containerstapelkräne verbunden werden können, wie u.a. in WO 2010/054852 A2 beschrieben. Soll ein Containerstapelkran von Block 104 zu Block 105 wechseln, so verlässt sein Stromabnehmer die Stromschiene 109 und fährt mit einem kraftstoff- oder batteriegespeisten Antriebsmotor zum Block 105. Am Block 105 wird der Stromabnehmer dann über eine Einführeinrichtung in die Stromschiene 110 eingefädelt, aus der der Containerstapelkran mit elektrischer Energie versorgt wird.

Eine in Fig. 1 durch einen Kreis gekennzeichnete Einfahrtszone 111 der Trasse 108 ist in Fig. 2 in seitlicher Draufsicht gezeigt. Die Trasse 108 weist eine z.B. aus WO 2010/054852 A2 an sich bekannte Einführungsvorrichtung 112 für den Abnehmerwagen des Containerstapelkrans auf. Zunächst wird der Abnehmerwagen horizontal an eine Anschlagplatte 113 herangefahren und schlägt daran an. Anschließend fährt der Containerstapelkran in Fahrrichtung F zur Stromschiene 110 hin, wobei der vertikal frei verschieblich gelagerte Abnehmerwagen mittels einer ersten Laufrollenanordnung durch die schräg nach oben verlaufende Einführschiene 114 in die richtige Höhe bezüglich der Stromschiene 110 gebracht wird. Anschließend fädelt eine zweite Laufrollenanordnung in Tragschienen 115 der Trasse 108 ein, und dann wird der Stromabnehmer über eine Stromabnehmer-Einführungsvorrichtung 116 mit der Stromschiene 110 kontaktiert, so dass der Containerstapelkran wieder mit elektrischer Energie versorgt wird.

Wie aus Fig. 2 leicht erkennbar, benötigt die Einfahrzone 111 relativ viel Platz. So beginnt die Stromschiene 110 erst ca. 3,50 m entfernt vom in Fig. 2 linken Anfang der Trasse 108. Da an beiden Enden der Trasse 108 eine Einführungsvorrichtung 116 und somit eine relativ lange Einfahrtszone benötigt wird, geht hierdurch viel Stapelplatz für Container verloren. Denn zum Anheben und Bewegen der Container muss der Containerstapelkran aus der Stromschiene mit elektrischer Energie versorgt werden. Grundsätzlich könne die Einfahrtszone zwar kürzer gemacht werden, jedoch verringert sich dadurch die Positioniergenauigkeit des Stromabnehmers gegenüber der Stromschiene in der Einfahrtszone, was vermehrt zu teuren und zeitraubenden Beschädigungen des Stromabnehmers und der Stromschiene führen kann.

Ein weiterer Nachteil ist, dass der Containerstapelkran während der Einfahrt an die Trasse 108 sehr viel langsamer fahren muss, um den Stromabnehmerwagen über die Einführungsvorrichtung 112 bzw. 116 in die Tragschienen 115 einfahren zu können.

Da die Einfahrzone 111 weit in den für die Lastwagen vorgesehen Fahrbereich ragt, muss die Einfahrzone 111 speziell gegen Kollisionen mit den Lastwagen abgesichert werden.

Aus der JP 2009-242101 geht weiteres Stromabnehmersystem bei verfahrbaren Containerkränen hervor. Dort wird der Stromabnehmer über eine am fahrbaren Kranfuß des Containerkrans angeordnete Gelenkanordnung oder Teleskopstange lediglich in horizontaler Richtung zwischen einer eingefahrenen Stellung am Kranfuß und einer ausgefahrenen Stellung an der Stromschiene hin- und herbewegt.

Die JP 42-56609 beschreibt ein Stromabnehmersystem in einem automatisch betriebenen Warenlager. Dort ist ein Stromabnehmerwagen längs einer ortsfest neben einem Lagerregal angeordneten Schiene verfahrbar. Der Stromabnehmer selbst kann lediglich in horizontaler Richtung zwischen einer eingefahrenen Stellung am Stromabnehmerwagen und einer ausgefahrenen Stellung an einer am Lagerregal angeordneten Stromschiene hin- und herbewegt werden.

Aufgabe der Erfindung ist es deshalb, die oben genannten Nachteile zu überwinden und ein Stromabnehmersystem und ein Krananlage bereitzustellen, welche eine einfache, verschleißarme und dennoch schnelle und genauer Positionierung und Herstellung einer elektrischen Verbindung zwischen einem Stromabnehmer und einer Stromschiene des Stromabnehmersystems ermöglichen und wenig Platz benötigen.

Diese Aufgabe wird mit einem Stromabnehmersystem mit den Merkmalen des Anspruchs 1, eine Anlage, insbesondere Krananlage, mit den Merkmalen des Anspruchs 8 sowie ein Verfahren mit den Merkmalen des Anspruchs 9 gelöst. Vorteilhafte Weiterbildungen und bevorzugte Ausgestaltungen der Erfindung sind in den Unteransprüchen angegeben.

Ein eingangs genanntes Stromabnehmersystem ist erfindungsgemäß dadurch gekennzeichnet, dass der Stromabnehmerwagen mittels eines Riemenantriebs mit einem elastischen und/oder flexiblen Riemen in der vertikalen Zustellrichtung bewegbar ist.

Bei einer vorteilhaften Ausführung des Stromabnehmersystems kann der Riemenantrieb zwei an in vertikaler Zustellrichtung gegenüberliegenden Enden der vertikalen Zustelleinheit angeordnete Umlenkrollen aufweisen, um die der Riemen umläuft, wobei der Stromabnehmerwagen an einem Zugtrumm des Riemens befestigt sein kann.

In einer vorteilhaften Fortbildung kann zur Führung von Zuleitungen vom Fahrzeug zum Stromabnehmerwagen und/oder zur Vertikalzustelleinheit an der Vertikalzustelleinheit eine Energiekette vorgesehen sein, deren eines Ende am Stromabnehmerwagen oder einer Befestigungsplatte für den Stromabnehmerwagen und deren anderes Ende an einem Rahmenteil der Vertikalzustelleinheit befestigt ist. Hierdurch wird die Beschädigungsgefahr der Zuleitungen verringert.

Weiters kann vorteilhaft ein Hubmotor zum Antreiben des Riemens vorgesehen sein, der in einer günstigen Ausführung eine Haltekraft bereitstellen kann, die den Stromabnehmerwagen in einer gewünschten vertikalen Stellung hält. Bevorzugt kann der Hubmotor mit einem Lagegeber zur Bestimmung der Position des Stromabnehmerwagens in vertikaler Zustellrichtung versehen sein.

In einer bevorzugten Ausführung kann der Riemen ein endlicher Riemen sein, dessen Enden mittels einer Klemmvorrichtung zusammengehalten sind, wobei vorteilhaft die Klemmvorrichtung die Enden des Riemens so zusammenklemmen kann, dass zumindest ein Ende des Riemens bei Überschreiten einer vorgegebenen Kraft aus der Klemmvorrichtung herausgelöst wird. Hierdurch kann eine Zerstörung oder Beschädigung des Stromabnehmersystems oder der Kranlange bei einem Störfall, der über die normalen betrieblichen seitlichen Abweichungen des Fahrzeugs von der Stromschienenanordnung hinausgeht, bereitgestellt werden. Denn dadurch kann sich das Ende des Riemens lösen und der Riemen somit von der Vertikalzustelleinheit abgezogen werden. Hierdurch kann vorteilhaft der über die Klemmvorrichtung am Riemen befestigte Stromabnehmerwagen von der Vertikalzustelleinheit getrennt werden, so dass insbesondere eine Beschädigung der empfindlichen Stromabnehmerkontakte und Stromschienenanordnung vermieden werden kann.

Ein weiteres, nicht zur Erfindung gehöriges Stromabnehmersystem ist dadurch gekennzeichnet, dass das Zustellelement über einen Riemenantrieb mit einem elastischen und/oder flexiblen Riemen in der horizontalen Zustellrichtung bewegbar ist.

In einer vorteilhaften Fortbildung des Stromabnehmersystems kann das Zustellelement in horizontaler Zustellrichtung beweglich in einem Ausschub gelagert sein, der in horizontaler Zustellrichtung beweglich in einem Befestigungsrahmen gelagert ist. Weiters kann am Befestigungsrahmen vorteilhaft ein Ausschubmotor zum Bewegen des Ausschubs in horizontaler Zustellrichtung angeordnet sein. In einer betrieblich günstigen Ausgestaltung kann ein Antriebsritzel des Ausschubmotors mit einer am Ausschub befestigten, in horizontaler Zustellrichtung verlaufenden Zahnstange kämmen, wodurch ein zuverlässiger Antrieb bereitgestellt wird. Vorteilhaft kann der Ausschubmotor mit einem Lagegeber zur Bestimmung der Position des Stromabnehmerwagens in horizontaler Zustellrichtung versehen sein.

In einer bevorzugten Ausgestaltung kann der Riemenantrieb zwei an in horizontaler Zustellrichtung gegenüberliegenden Enden des Ausschubs angeordnete Umlenkrollen aufweisen, um die der Riemen umläuft, wobei ein Befestigungstrumm des umlaufenden Riemens am Befestigungsrahmen und ein Zugtrumm am Zustellelement befestigt ist.

In einer weiteren vorteilhaften Fortbildung kann zur Führung von Zuleitungen vom Fahrzeug zum Stromabnehmerwagen an der Horizontalzustelleinheit ein Energiekette vorgesehen sein, deren eines Ende am Befestigungsrahmen und deren anderes Ende am Zustellelement befestigt ist. Hierdurch wird die Beschädigungsgefahr der Zuleitungen verringert.

Bevorzugt können der oder die Riemen als Zahnriemen oder Keilriemen ausgebildet sein. Als Material kann vorteilhaft ein Gummimaterial oder ein gummierter Stoff- oder Geweberiemen verwendet werden. Weiter können vorteilhaft für einen oder beide Riemen jeweils eine Spannvorrichtung zur Einstellung der Vorspannung jedes Riemens vorgesehen sein.

Das Stromabnehmersystem kann vorteilhaft aus einer Kombination der oben aufgeführten Stromabnehmersysteme mit horizontaler Zustellung durch die Horizontalzustelleinheit und vertikaler Zustellung durch die Vertikalzustelleinheit gebildet sein. Bei einer solchen Kombination kann die Vertikalzustelleinheit an einem vorderen Ende des Zustellelements angeordnet sein. Weiter kann vorteilhaft das andere Ende der Energiekette der Vertikalzustelleinheit nicht an einem Rahmenteil der Vertikalzustelleinheit, sondern am vorderen Ende des Zustellelements befestigt sein.

Eine eingangs genannte Anlage, insbesondere Kranlange, ist erfindungsgemäß dadurch gekennzeichnet, dass das Stromabnehmersystem wie oben in Absätzen 13 bis 18 angegeben ausgeführt ausgebildet ist.

Ein erfindungsgemäßes Verfahren zum Zustellen eines an einem verfahrbaren Fahrzeug, insbesondere Kran, angeordneten, mit Stromabnehmerkontakten versehenen Stromabnehmerwagens eines erfindungsgemäßen, Stromabnehmersystems zu einer Stromschiene einer Stromschienenanordnung bei einer erfindungsgemäßen Anlage, ist dadurch gekennzeichnet, dass der Stromabnehmerwagen mittels einer Positioniereinheit sowohl in horizontaler Zustellrichtung als auch in vertikaler Zustellrichtung zur Stromschiene zugestellt wird.

Bevorzugt kann beim erfindungsgemäßen Verfahren der Stromabnehmerwagen gleichzeitig in zwei Raumrichtungen, insbesondere in horizontaler Zustellrichtung und vertikaler Zustellrichtung, bewegt werden. Dabei kann vorteilhaft unmittelbar vor dem Einführen der Stromabnehmerkontakte in die Stromschiene der Stromabnehmerwagen nach Abschluss der Zustellung in horizontaler Zustellrichtung nur noch in vertikaler Zustellrichtung zugestellt werden. Auch kann der Stromabnehmerwagen zuerst in horizontaler Zustellrichtung und dann in vertikaler Zustellrichtung zugestellt werden.

Um ein möglichst sanftes und verschleißfreies Bewegen des Stromabnehmerwagens zu ermöglichen, kann der Stromabnehmerwagen in horizontaler Zustellrichtung und/oder in vertikaler Zustellrichtung erst langsam und dann schnell zugestellt und vor Ende der Zustellbewegung abgebremst werden. Weiter kann zum zielgenauen Kontaktieren der Stromabnehmerkontakte mit der Stromschiene die Position des Stromabnehmerwagens in horizontaler Zustellrichtung und/oder in vertikaler Zustellrichtung über einen Lagegeber an einem Ausschubmotor für die horizontale Zustellung des Stromabnehmerwagens bzw. einen Lagegeber an einem Hubmotor für die vertikale Zustellung des Stromabnehmerwagens (10) bestimmt werden.

Weitere Besonderheiten und Vorzüge der Erfindung ergeben sich aus der folgenden Beschreibung eines bevorzugten Ausführungsbeispiels anhand der begleitenden Zeichnungen. Es zeigen:
- **Fig. 1**: eine Draufsicht auf einen bekannten Containerumschlagplatz;
- **Fig. 2**: eine Seitenansicht einer Einfahrtszone des bekannten Containerumschlagplatz aus Fig. 1;
- **Fig. 3**: eine Einfahrtszone einer erfindungsgemäßen Krananlage;
- **Fig. 4**: einen stirnseitige Draufsicht auf einen Teil des Kranfußes einer Krananlage mit daran angeordnetem erfindungsgemäßen Stromabnehmersystem;
- **Fig. 5**: eine dreidimensionale Ansicht des Stromabnehmersystems aus Fig. 4 in ausgefahrener Stellung;
- **Fig. 6**: eine Seitenansicht des Stromabnehmersystems aus Fig. 4 in ausgefahrener Stellung;
- **Fig. 7**: eine Seitenansicht des Stromabnehmersystems aus Fig. 6 in eingefahrener Stellung;
- **Fig. 8**: eine Draufsicht auf das Stromabnehmersystem aus Fig. 5 in ausgefahrener Stellung;
- **Fig. 9**: eine Draufsicht auf eine horizontale Zustelleinheit des Stromabnehmersystems aus Fig. 5 in ganz eingefahrener Stellung;
- **Fig. 10**: eine Draufsicht auf die Zustelleinheit aus Fig. 9 in zum Teil ausgefahrener Stellung;
- **Fig. 11**: eine Draufsicht auf die Zustelleinheit aus Fig. 9 in ganz ausgefahrener Stellung;
- **Fig. 12**: einen Schnitt durch die Zustelleinheit aus Fig. 10 entlang der Linie A-A;
- **Fig. 13**: eine Seitenansicht auf eine vertikale Zustelleinheit des Stromabnehmersystems aus Fig. 5 von in Fig. 5 unten links;
- **Fig. 14**: einen Schnitt durch die Zustelleinheit aus Fig. 13 entlang der Linie B-B.

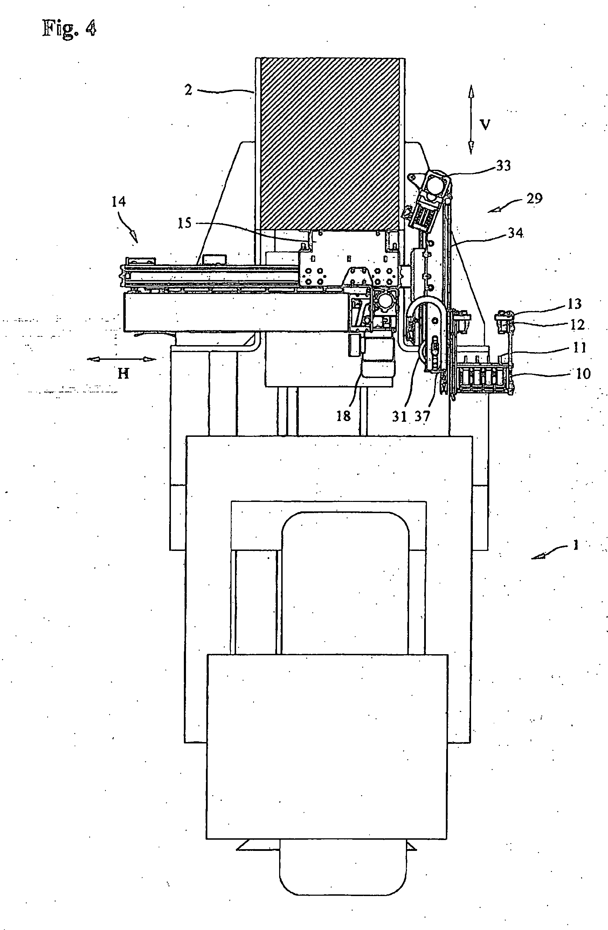

Fig. 4 zeigt einen fahrbaren Kranfuß 1 eines als zeichnerisch nur angedeuteten Kran 2 ausgebildeten Fahrzeugs einer erfindungsgemäßen Krananlage, der über zeichnerisch nur angedeutet Gummireifen 3 in einem in Fig. 1 gezeigten, an sich bekannten Containerumschlagplatz 101 verfahren kann.

Der Kran 2 wird zum Umschlagen von Containern aus einer in Fig. 3 gezeigten erfindungsgemäßen Stromschienenanordnung 4 mit elektrischer Energie versorgt. Die Stromschienenanordnung 4 ist vorliegend als an sich bekanntes Schleifleitungssystem ausgebildet. Eine Einfahrzone 5 der Stromschienenanordnung 4 weist, anders als die Einfahrzone 111 der bekannten Trasse 108, keinen Einfahrtrichter 112 mit Anschlagplatte 113 und Einführschiene 114 auf. Vielmehr sind nur eine Einfahrhilfe 6 einer Stromschiene 7 sowie nur eine Tragschiene 8 vorgesehen. Im Bereich der Einfahrhilfe 6 kann eine nicht gezeichnete Anschlagplatte vorgesehen werden.

Im Gegensatz zur bekannten Trasse 108 aus Fig. 2 beträgt der Abstand zwischen dem in Fig. 3 linken Ende der Stromschienenanordnung 4 und der Einfahrhilfe 6 hier lediglich 1 m, und nicht wie bei der bekannten Ausführungen 3 m. Die Einfahrzone 5 der erfindungsgemäßen Krananlage ist also deutlich kürzer als die der bekannten.

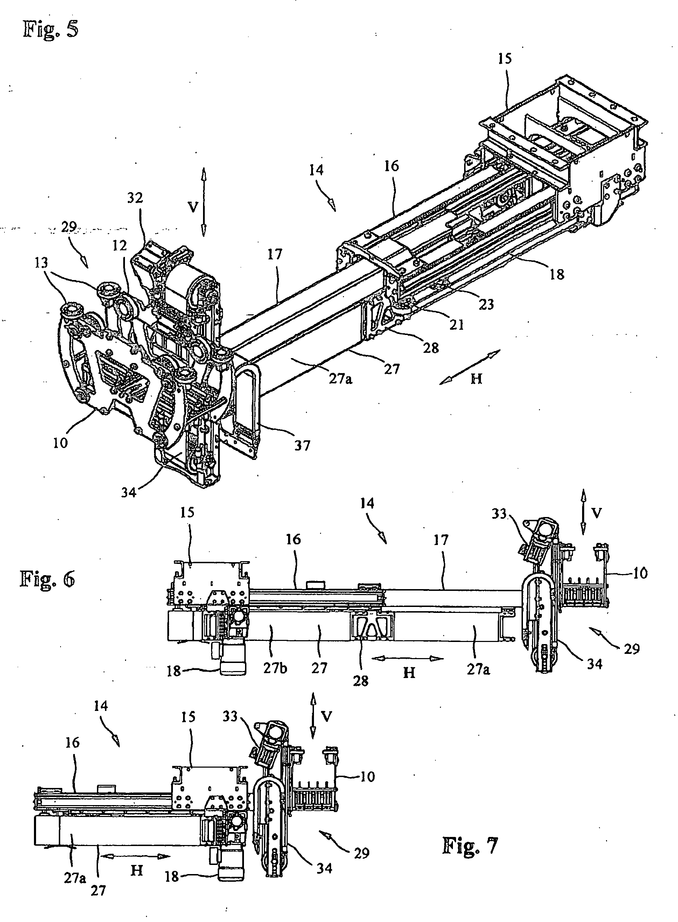

Dies wird durch ein in Fig. 4 am Kranfuß 1 und in Fig. 5 in einer dreidimensionalen Ansicht von der in Fig. 4 rechten Seite gezeigtes erfindungsgemäßes Stromabnehmersystem 9 ermöglicht. Das Stromabnehmersystem 9 ist am oberen Teil des Kranfußes 5 ungefähr in der gleichen Höhe wie die Stromschiene 7 angeordnet. Zur Verbindung mit der Stromschiene 7 weist das Stromabnehmersystem 9 einen Stromabnehmerwagen 10 mit mehreren Stromabnehmerkontakten 11 auf. Der Stromabnehmerwagen 10 wird mittels Tragrollen 12 und Führungsrollen 13 in der Tragschiene 8 geführt.

Um den Stromabnehmerwagen 9 mit der Stromschiene 6 verbinden zu können, fährt der Kranfuß 1 des Krans 2 in die Einfahrzone 5 der Stromschienenanordnung 4 in der Nähe der Einfahrhilfe 6. Um während der Fahrt des Krans 2 Kollisionen mit Containern oder anderen Teilen zu vermeiden, ist der Stromabnehmerwagen 10 dabei ganz in die in Fig. 4 gezeigte eingefahrene Stellung eingefahren. Dann wird der Stromabnehmerwagen 10 mit Hilfe einer Positioniereinheit sowohl in horizontaler Zustellrichtung H quer zur Fahrrichtung des Kranfußes 1 als auch in vertikaler Richtung V zur Einfahrhilfe 6 hin bewegt. Hierdurch kann der Stromabnehmerwagen 10 gleichzeitig in zwei Raumrichtungen bewegt werden, so dass der Stromabnehmerwagen 10 schnell und direkt zur Stromschiene 7 zugestellt werden kann. Erst unmittelbar vor dem Einführen der Stromabnehmerkontakte 11 in die Stromschiene, z.B. eine Schleifleitung, erfolgt dann nach Abschluss der horizontalen Zustellung nur noch eine vertikale Zustellung. Alternativ kann auch zuerst eine rein horizontale Zustellung und anschließend eine rein vertikale Zustellung erfolgen.

Die Zustellung des Stromabnehmerwagens 10 in horizontaler Zustellrichtung H erfolgt über eine in Fig. 4 bis 12 gezeigte Horizontalzustelleinheit 14. Die Horizontalzustelleinheit 14 weist einen Befestigungsrahmen 15 auf, der fest am Kranfuß 1 befestigt ist.

Im Befestigungsrahmen 15 ist ein Ausschub 16 in die quer zur Fahrrichtung F des Kranfußes 1 verlaufende horizontale Zustellrichtung H bewegbar angeordnet. Der Ausschub 16 kann dabei zwischen der in Fig. 6 gezeigten ausgefahrenen Stellung und der in Fig. 7 gezeigten ganz eingefahrene Stellung bewegt werden. Im Ausschub 16 ist ein als Schlitten 17 ausgebildetes erstes Zustellelement gegenüber dem Ausschub 16 wiederum in horizontale Zustellrichtung H bewegbar angeordnet, wobei der Schlitten 17 vollständig in den Ausschub 16 eingefahren werden kann. Der Stromabnehmerwagen 10 ist am vorderen Ende des Schlittens 17 angeordnet, also am in Fig. 5 linken und in Fig. 4, 6, 7 und 9 bis 12 rechten Ende.

Da sowohl der Ausschub 16 als auch der Schlitten 17 in horizontaler Zustellrichtung H beweglich angeordnet sind, kann der Stromabnehmerwagen 10 zwischen der in Fig. 4, 7 und 9 gezeigten ganz eingefahrenen Stellung in die in Fig. 5, 6, 8 und 12 gezeigte ganz ausgefahrene Stellung verfahren werden.

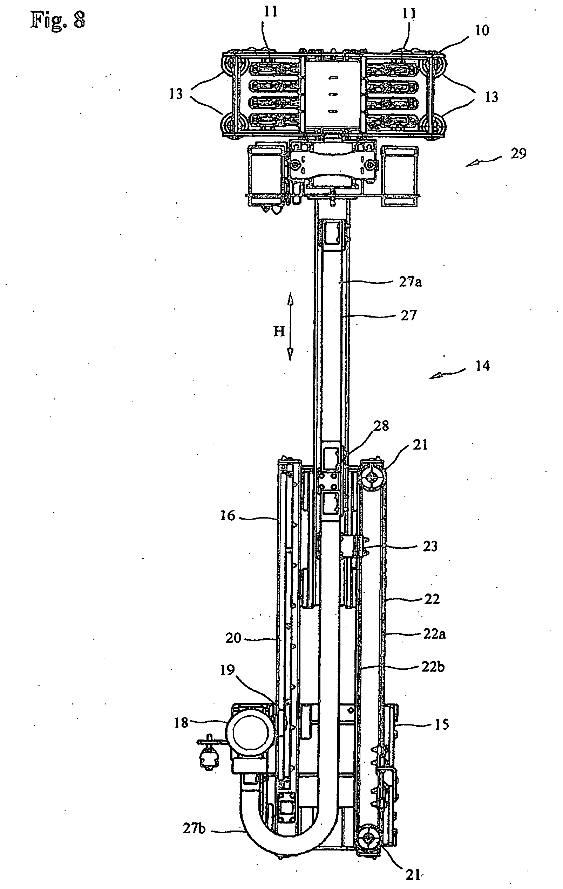

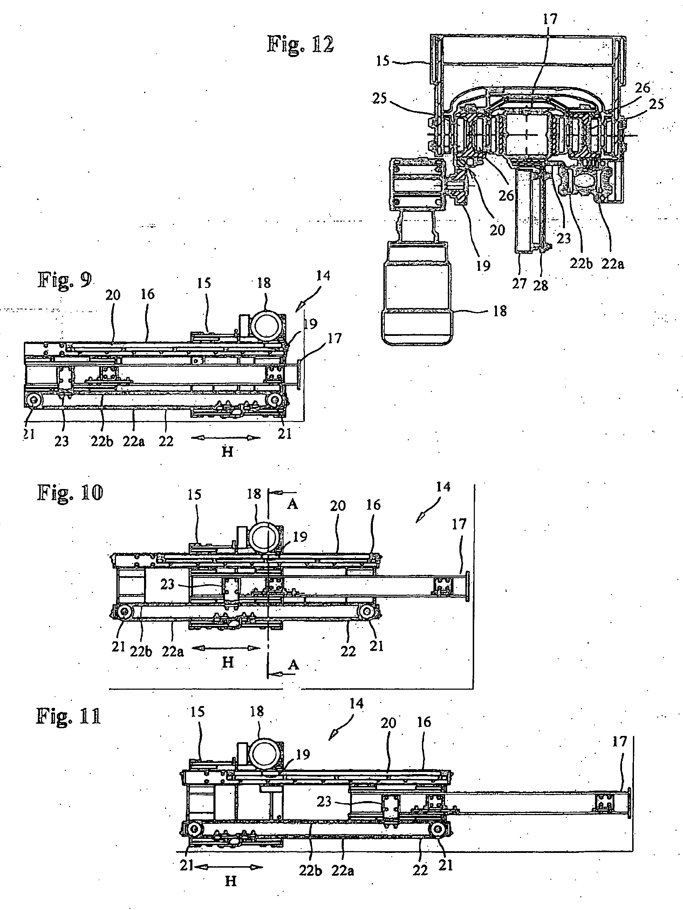

Das Verfahren des Ausschubs 16 und des Schlittens 17 wird wie nachfolgend beschrieben bewerkstelligt. Zum Verfahren des Ausschubs 16 ist, wie in Fig. 8 besonders gut erkennbar, am Befestigungsrahmen 15 ein als Elektromotor ausgebildeter Ausschubmotor 18 befestigt. Der Ausschubmotor 18 treibt über ein Antriebsritzel 19 (Fig. 11) eine fest am Ausschub 16 befestigte Zahnstange 20, welche fast über die gesamte Länge des Ausschubs 16 reicht. Hierdurch kann der Ausschub 16 zwischen den in Fig. 9 und Fig. 12 gezeigten Stellungen verfahren werden.

Um den Schlitten 17 einfach ein- und ausfahren zu können, ohne einen eigenen Elektromotor vorsehen zu müssen, sind am vorderen und hinteren Ende des Ausschubs 16 Umlenkrollen 21 angeordnet, die um senkrecht zur Fahrrichtung F des Kranfußes 1 und senkrecht zur horizontalen Zustellrichtung H verlaufende Achsen drehbar sind. Um die Umlenkrollen 21 ist ein Riemen 22 aus elastischem und/oder flexiblem Material gelegt und wie in Fig. 8 erkennbar mit einem Befestigungstrumm 22a am Befestigungsrahmen 15 befestigt. An einem Zugtrumm 22b des Riemens 22 ist der Schlitten 17 mittels einer Winkelplatte 23 befestigt.

Wird nun, wie Fig. 9 bis 11 gezeigt, der Ausschub 16 durch den Ausschubmotor 18 von der in Fig. 9 gezeigten Stellung in horizontale Zustellrichtung H ausgefahren, also in Fig. 9 nach rechts bewegt, so wird der Riemen 22 in die Fig. 10 gezeigte Richtung bewegt, läuft also im Uhrzeigersinn um die Umlenkrollen 21. Da der Schlitten 17 fest mit dem Riemen 22 verbunden ist, zieht der Riemen 22 den Schlitten 17 mit, so dass der Schlitten 17 in die gleiche horizontale Zustellrichtung H bewegt wird, wie der Ausschub 16. Somit können der Ausschub 16 und der Schlitten 17 gleichmäßig mit einfachen Mitteln zwischen den in Fig. 9 und 11 gezeigten Stellungen verfahren werden.

Da der Riemen 22 vorteilhaft aus einem elastischen Material besteht, wird eine in gewissen Grenzen elastische Verbindung mit einer stoßdämpfenden Wirkung zwischen Stromabnehmerwagen 10 einerseits und Befestigungsrahmen 15 andererseits bereitgestellt. Beispielsweise kann der Riemen 22 als Keilriemen oder als Zahnriemen ausgebildet sein, wobei die Umlenkrollen dann entsprechend an die Riemenform angepasst sind.

In einer bevorzugten Ausführung kann nach dem Einfahren des Stromabnehmerwagens 10 in die Tragschiene 8 und der elektrischen Kontaktierung zwischen Stromabnehmerkontakten 11 und Stromschiene 7 der Ausschubmotor 18 in Leerlaufbetrieb geschaltet werden. Hierdurch kann der Riemen 22, gehemmt durch die Vorspannung des Riemens 22 und ggf die Trägheit des Rotors des Ausschubmotors 18, um die Umlenkrollen 21 umlaufen. Bevorzugt wird die Vorspannung des Riemens 22 so eingestellt, dass der Stromabnehmerwagen 10 bei normalem Betrieb ohne äußere Störkräfte in seiner horizontalen Stellung gehalten wird. Treten beim Verfahren des Krans 2 äußere Störkräfte in horizontaler Richtung auf, beispielsweise da die Stromschienenanordnung 4 nicht exakt geradlinig verläuft, so werden diese Änderungen durch eine Bewegung des Riemens 22 und dadurch bedingt des leerlaufenden Ausschubmotors 18 in horizontaler Zustellrichtung H ausgeglichen.

Alternativ oder zusätzlich kann der Ausschubmotor 18 auch so angesteuert werden, dass er eine vorgegebene Haltekraft auf den Riemen 22 ausübt, so dass der Riemen 22 erst beim Überschreiten von vorgegebenen Kräften bewegt werden kann.

Wird im Bereich der Einfahrhilfe 6 eine in den Figuren nicht gezeichnete Anschlagplatte zum Positionieren des Stromabnehmerwagens 10 in der horizontalen Zustellrichtung H verwendet, so können durch den elastischen Riemen 22 beim Anfahren an die Anschlagplatte auftretende Stöße abgefedert werden, wodurch der Verschleiß sämtlicher beteiligter Teile verringert werden kann.

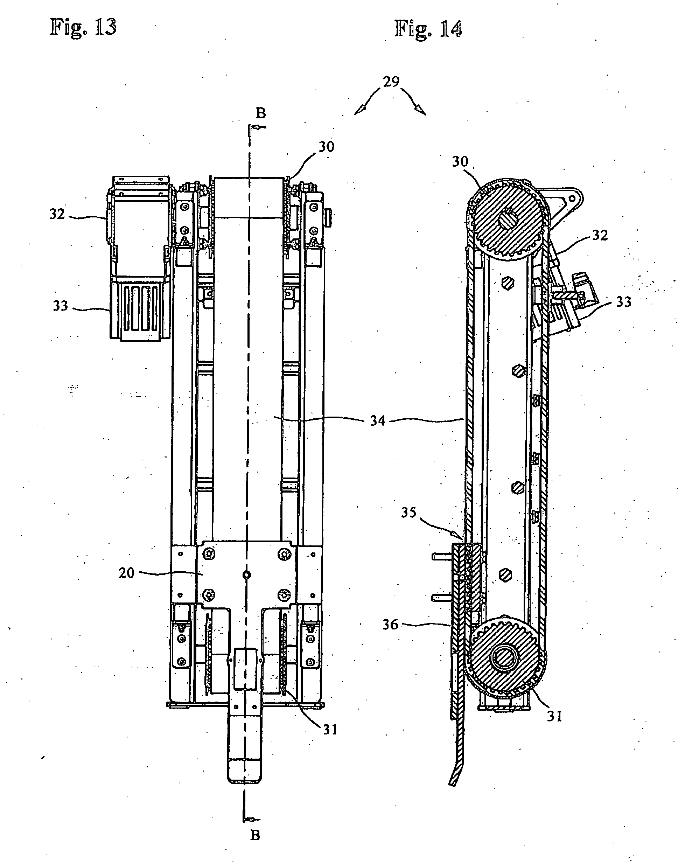

Anhand des in Fig. 13 gezeigten Schnitts durch die Horizontalzustelleinheit 14 entlang der Linie A-A in Fig. 10 wird der Aufbau der Horizontalzustelleinheit 14 nochmals verdeutlicht. Gut erkennbar ist der Antrieb des Ausschubs 16 über den Ausschubmotor 18, das Antriebsritzel 19 und die am Ausschub befestigte Zahnstange 20. Der Ausschub 16 weist dabei zwei parallel zueinander angeordnete Doppel-T-förmige Schienen 24 auf, die in drehbar am Befestigungsrahmen 15 gelagerten Ausschubrollen 25 beweglich gelagert sind. Ebenso greifen drehbar am Schlitten 17 gelagerte Schlittenrollen 26 in die andere Seite der Doppel-T-förmige Schienen 24 ein, so dass der Schlitten 17 verfahrbar am Ausschub 16 gelagert ist. Der Riemen 22 ist an einem im Querschnitt rechteckförmigen Hohlträger des Schlittens 17 befestigt.

Um die mittels der Stromabnehmerkontakte 11 an der Stromschienenanordnung 4 abgegriffene elektrische Energie den Verbrauchern des Krans zuzuführen, ist am in Fig. 8 unteren Ende des Schlittens 17 eine an sich bekannte, in der Horizontalen flexible Energiekette 27 befestigt, welche die elektrischen Zuleitungen im Bereich der Horizontalzustelleinheit 14 enthält. Die Energiekette 27 verläuft, wie insbesondere aus Fig. 5 bis 8 hervorgeht, vom Befestigungselement 15 unterhalb des Ausschubs 16 und des Schlittens 17 zum vorderen Ende des Schlittens 17. In der vorliegenden Ausführung ist die Energiekette 27 zweigeteilt und verläuft unterhalb von Ausschub 16 und Schlitten 17. Am hinteren Ende des Schlittens 17 ist eine Halterung 28 für den vom vorderen Ende des Schlittens 17 kommenden Teil 27a der Energiekette 27 und den vom Befestigungselement 15 kommenden Teil 27b der Energiekette 27 vorgesehen.

Ein in WO 2010/054852 A2 gezeigter Kabelschlepp ist somit nicht notwendig, was vorteilhaft ist, da die beim Kabelschlepp bestehende Gefahr des Abreißens der herumhängenden Kabel vermieden wird.

Bevorzugt kann der Ausschubmotor 18 der Horizontalzustelleinheit 14 geregelt betrieben werden, so dass das Anfahren langsam erfolgt, dann schnell weitergefahren wird und vor Ende der Zustellbewegung abgebremst wird. Hierdurch kann der Stromabnehmerwagen 10 sanft an die Anschlagplatte gefahren werden. In einer weiteren vorteilhaften Ausführung kann der Ausschubmotor 18 auch mit einem Lagegeber versehen werden, so dass aus der Motorbewegung die genaue Position des Stromabnehmerwagens 10 bezüglich des Kranfußes 1 bestimmt werden kann.

Im Gegensatz zu einer in der WO 2010/054852 A2 gezeigten Teleskop-Zustellervorrichtung weist die Horizontalzustelleinheit 14 aufgrund des elastischen und/oder flexiblen Riemens 22 einen geringere Verschleiß und eine schnellere Zustellung auf, so dass sich die Einfahrzeiten in eine neue Stromschienenanordnung 4 verringern. Zudem baut die Horizontalzustelleinheit 14 kleiner, da anders als bei einer Teleskopvorrichtung nicht mehrere rechteckförmige Profile ineinander geführt werden müssen.

Die Zustellung des Stromabnehmerwagens 10 in vertikaler Zustellrichtung V erfolgt über eine in Fig. 4 bis 14 gezeigte Vertikalzustelleinheit 29.

Die Vertikalzustelleinheit 29 ist fest am vorderen, in Fig. 4, 6, 7 und 9 bis 12 rechten Ende des Schlittens 17 der Horizontalzustelleinheit 14 befestigt. An in den Fig. 13 und 14 oberen und unteren Enden der Vertikalzustelleinheit 29 sind als Zahnriemenrollen 30, 31 ausgebildete Umlenkrollen um eine senkrecht zur vertikalen Zustellrichtung V und senkrecht zur horizontalen Zustellrichtung H verlaufende Achse drehbar gelagert. Die in Fig. 13 und 14 obere Zahnriemenrolle 30 ist über ein Winkelgetriebe 32 mit einem als Elektromotor ausgebildeten Hubmotor 33 verbunden. Um die Zahnriemenrollen 30, 31 läuft ein als Zahnriemen 34 ausgebildeter Riemen, im vorliegenden Ausführungsbeispiel ein endlicher Zahnriemen, dessen Enden mittels einer Klemmvorrichtung 35 zusammengehalten werden. Die Seite des Zahnriemens 34, an der der Stromabnehmerwagen 10 befestigt ist, bildet ein Zugtrumm 34a des Riemenantriebs. An der in Fig. 14 linken Außenseite der Klemmvorrichtung 35 ist eine Befestigungsplatte 36 angebracht, an der der Stromabnehmerwagen 10 befestigt ist. Der Zahnriemen 34 und somit der Stromabnehmerwagen 10 können folglich zwischen den Zahnriemenrollen 30, 31 in vertikaler Zustellrichtung V motorisch betrieben verfahren werden. Anstelle eines endlichen, mittels der Klemmvorrichtung 35 zusammengehaltenen Zahnriemens 34 kann auch ein endlos umlaufender Zahnriemen verwendet werden. Ebenso können andere geeignete Riemenantriebe verwendet werden, beispielsweise ein Keilriemenantrieb mit entsprechend angepassten Rollen.

Die elektrischen Zuleitungen zum Hubmotor 33 wie auch die elektrischen Zuleitungen für die Versorgung des Krans 2 werden in einer an sich bekannten, in der Vertikalen flexiblen Energiekette 37 geführt, deren eines Ende am vorderen Ende des Schlittens 17 oder einem Rahmenteil der Vertikalzustelleinheit 29 und deren anderes Ende am Stromabnehmerwagen 10 oder der Befestigungsplatte 36 befestigt ist. Die Zuführung der Leitungen vom Kran 2 zur Vertikalzustelleinheit 29 erfolgt über die horizontale Energiekette 27, wobei das vordere Ende des am Schlitten 17 verlaufenden Teils 27a der Energiekette 27 anstelle am Schlitten 17 auch an einem Rahmenteil der Vertikalzustelleinheit 29 befestigt sein kann.

In einer bevorzugten Ausführung kann nach dem Einfahren des Stromabnehmerwagens 10 in Tragschiene 8 und der elektrischen Kontaktierung zwischen Stromabnehmerkontakten 11 und Stromschiene 7 der Hubmotor 33 in Leerlaufbetrieb geschaltet werden. Hierdurch kann der Zahnriemen 34, gehemmt durch die Vorspannung des Zahnriemens 34 und ggf. die Trägheit des Winkelgetriebes 32 und des Rotors des Hubmotors 33, um die Zahnriemenrollen 30, 31 umlaufen. Bevorzugt wird die Vorspannung des Zahnriemens 34, beispielsweise durch die Klemmvorrichtung 33 oder eine vorteilhaft nicht gezeichnete Spannrolle, so eingestellt, dass der Stromabnehmerwagen 10 bei normalem Betrieb ohne äußere Störkräfte in seiner vertikalen Stellung gehalten wird. Treten dann beim Verfahren des Krans 2 äußere Störkräfte in vertikaler Richtung auf, beispielsweise durch Bodenunebenheiten und somit Änderungen der Höhe des Stromabnehmersystems 9 gegenüber der Stromschienenanordnung 4, so werden diese Änderungen durch eine Bewegung des Zahnriemen 34 in vertikaler Zustellrichtung V ausgeglichen und der Stromabnehmer 10 übt keine zusätzlichen Kräfte auf die Stromschienenanordnung 4 aus.

Alternativ oder zusätzlich kann der Hubmotor 33 auch so angesteuert werden, dass er eine vorgegebene Haltekraft auf den Zahnriemen 34 ausübt, so dass der Zahnriemen 34 erst beim Überschreiten von vorgegebenen Kräften bewegt werden kann.

Ein weiterer Vorteil der Befestigung des Stromabnehmerwagens 10 über den elastischen Zahnriemen 34 ist, dass der Zahnriemen 34 in gewissen Grenzen auch in sich verwinden und verdrehen kann, so dass der Stromabnehmerwagens 10 von Bewegungen des Krans 2 entkoppelt werden kann. Beispielsweise kann, wenn der Boden, auf dem der Kran 2 fährt, eine kleine Neigung oder Steigung gegenüber der Stromschiene 7 aufweist, eine Verdrehung des Stromabnehmerwagens 10 um eine horizontale, senkrecht Achse durch den Zahnriemen 34 ausgeglichen werden. Auch können gewisse Änderungen des Abstands zwischen Kran 2 und Stromschienenanordnung in horizontaler Zustellrichtung H dadurch ausgeglichen werden, dass der Zahnriemen 34 etwas in die betreffende Richtung gedrückt oder gezogen wird. Gleichermaßen lassen sich Fertigungsungenauigkeit der Stromschienenanordnung 4 in gewissem Umfang ausgleichen, z.B. wenn die Stromschiene nicht exakt gerade verläuft oder über ihre Länge geringe Höhenschwankungen aufweist. Auch Witterungsbedingte Änderungen, beispielsweise aufgrund temperaturbedingter Materialausdehnungen, können somit ohne Nachteil für den Betrieb des Krans ausgeglichen werden.

Aufgrund der Elastizität des Zahnriemens 34 können grundsätzlich unterschiedliche Bewegungen in unterschiedlichste Raumrichtungen in einem für den Normalbetrieb des Stromabnehmersystems 9 ausreichenden Umfang ausgeglichen werden. So können u.a. Schrägstellungen oder seitliche Verkippungen des Krans 2 gegenüber der Stromschienenanordnung ausgeglichen werden. Eine aufwendige aktive Nachführung des Stromabnehmerwagens 10 ist somit ebenso wenig notwendig wie eine vollkommen freie Lagerung, welche die Gefahr eines Ausschlagbedingten höheren Verschleiß sowie eine schlechtere Handhabung und Steuerbarkeit des Stromabnehmerwagens mit sich bringt.

Vorteilhaft kann die von der Klemmvorrichtung 35 ausgeübte Klemmung der Enden des Zahnriemens 34 so ausgelegt werden, dass zumindest ein Ende bei Überschreiten einer vorgegebenen Kraft aus der Klemmvorrichtung herausgelöst wird. Dies ist eine zusätzliche Sicherung gegen Zerstörung oder Beschädigung des Stromabnehmersystems 9 oder der Kranlange bei einem Störfall, der über die normalen betrieblichen Abweichungen hinausgeht. Fährt beispielsweise der Kran 2 aufgrund eines Bedienfehlers zu weit von der Stromschienenanordnung 4 weg, so stellt die Klemmvorrichtung 35 eine Sollbruchstelle dar, von welcher sich der Stromabnehmerwagen 10 ablösen kann. Eine Beschädigung beispielsweise ein Verbiegen der Stromschiene 7 oder der Tragschiene 8, wird somit vermieden.

Bevorzugt kann der Hubmotor 33 der Vertikalzustelleinheit 29 geregelt betrieben werden, so dass das Anfahren langsam erfolgt, dann schnell weitergefahren wird und vor Ende der Zustellbewegung abgebremst wird. Hierdurch kann der Stromabnehmerwagen 10 sanft an die Einfahrhilfe 6 herangefahren und dann in die Tragschiene 8 eingeführt werden. In einer weiteren vorteilhaften Ausführung kann der Hubmotor 33 auch mit einem Lagegeber versehen werden, so dass aus der Motorbewegung die genaue Position des Stromabnehmerwagens 10 in vertikaler Zustellrichtung V bestimmt werden kann.

Die Erfindung wurde oben anhand einer Krananlage beschrieben, bei der der Kran 2 zwischen unterschiedlichen Stromschienenanordnungen hin- und herfährt und dabei immer wieder seinen Stromabnehmerwagen 10 in eine Stromschiene 7 einfahren muss. Die Erfindung kann aber ebenso bei anderen beweglichen Verbrauchern elektrischer Energie, welche mittels eines Stromabnehmerwagens 10 in eine Stromschienen- oder Schleifleitungsanordnungen einfahren müssen, verwendet werden.

## Patentansprüche

1. Stromabnehmersystem (9) für ein längs einer Stromschienenanordnung (4) verfahrbares Fahrzeug (2), mit mindestens einem Stromabnehmerwagen (10) und daran angeordneten Stromabnehmerkontakten (11), welche mit einer Stromschiene (7) der Stromschienenanordnung (4) verbindbar sind, und einer Vertikalzustelleinheit (29) zum Bewegen des Stromabnehmerwagens (10) in einer vertikalen Zustellrichtung (V), **dadurch gekennzeichnet, dass** der Stromabnehmerwagen (10) mittels eines Riemenantriebs (30, 31) mit einem elastischen und/oder flexiblen Riemen (34) in der vertikalen Zustellrichtung (V) bewegbar ist.

2. Stromabnehmersystem (9) nach Anspruch 1, **dadurch gekennzeichnet, dass** der Riemenantrieb zwei an in vertikaler Zustellrichtung (V) gegenüberliegenden Enden der vertikalen Zustelleinheit (29) angeordnete Umlenkrollen (30, 31) aufweist, um die der Riemen (34) umläuft, wobei der Stromabnehmerwagen (10) an einem Zugtrumm (34a) des Riemens (34) befestigt ist.

3. Stromabnehmersystem (9) nach Anspruch 1 oder 2, **dadurch gekennzeichnet, dass** zur Führung von Zuleitungen vom Fahrzeug (2) zum Stromabnehmerwagen (10) und/oder zur Vertikalzustelleinheit (14) an der Vertikalzustelleinheit (14) eine Energiekette (37) vorgesehen ist, deren eines Ende am Stromabnehmerwagen (10) oder einer Befestigungsplatte (36) für den Stromabnehmerwagen (10) und deren anderes Ende an einem Rahmenteil der Vertikalzustelleinheit (29) befestigt ist.

4. tromabnehmersystem (9) nach einem der voranstehenden Ansprüche, **dadurch gekennzeichnet, dass** ein Hubmotor (33) zum Antreiben des Riemens (34) vorgesehen ist.

5. Stromabnehmersystem (9) nach Anspruch 4, **dadurch gekennzeichnet, dass** der Hubmotor (33) eine Haltekraft bereitstellt, die den Stromabnehmerwagen (10) in einer gewünschten vertikalen Stellung hält, und/oder wobei der Hubmotor (33) mit einem Lagegeber zur Bestimmung der Position des Stromabnehmerwagens (10) in vertikaler Zustellrichtung (V) versehen ist.

6. Stromabnehmersystem (9) nach einem der voranstehenden Ansprüche, **dadurch gekennzeichnet, dass** der Riemen ein endlicher Riemen (34) ist, dessen Enden (34a, 34b) mittels einer Klemmvorrichtung (35) zusammengehalten sind.

7. Stromabnehmersystem (9) nach Anspruch 6, **dadurch gekennzeichnet, dass** die Klemmvorrichtung (35) die Enden (34a, 34b) des Riemens (34) so zusammenklemmt, dass zumindest ein Ende (34a) des Riemens (34) bei Überschreiten einer vorgegebenen Kraft aus der Klemmvorrichtung (35) herausgelöst wird, und/oder wobei der Stromabnehmerwagen (10) über die Klemmvorrichtung (35) an dem Riemen (34) befestigt ist.

8. Anlage, insbesondere Kranlange, mit einem längs einer Stromschienenanordnung (4) verfahrbaren Fahrzeug (2), insbesondere Kran (2), mit mindestens einem Stromabnehmersystem (9) mit daran angeordneten Stromabnehmerwagen (10) mit Stromabnehmerkontakten (11), welche mit einer Stromschiene (7) der Stromschienenanordnung (4) verbindbar sind, **dadurch gekennzeichnet, dass** das Stromabnehmersystem (9) nach einem der voranstehenden Ansprüche ausgebildet ist.

9. Verfahren zum Zustellen eines an einem verfahrbaren Fahrzeug (2), insbesondere Kran (2), angeordneten, mit Stromabnehmerkontakten (11) versehenen Stromabnehmerwagens (10) eines Stromabnehmersystems (9) nach einem der Ansprüche 1 bis 7, wobei das Stromabnehmersystem (9) eine Horizontalzustelleinheit (14) mit mindestens einem in eine horizontale Zustellrichtung (H) bewegbaren Zustellelement (17) zum Bewegen des Stromabnehmerwagens (10) in der horizontalen Zustellrichtung (H) aufweist, welches Zustellelement über einen Riemenantrieb (21, 22) mit einem elastischen und/oder flexiblen Riemen (22) in der horizontalen Zustellrichtung (H) bewegbar ist, zu einer Stromschiene (7) einer Stromschienenanordnung (4), insbesondere bei einer Anlage nach Anspruch 8, **dadurch gekennzeichnet, dass** der Stromabnehmerwagen (10) mittels einer Positioniereinheit (14, 29) sowohl in horizontaler Zustellrichtung (H) als auch in vertikaler Zustellrichtung (V) zur Stromschiene (7) zugestellt wird.

10. Verfahren nach Anspruch 9, **dadurch gekennzeichnet, dass** der Stromabnehmerwagen (10) gleichzeitig in zwei Raumrichtungen, insbesondere in horizontaler Zustellrichtung (H) und vertikaler Zustellrichtung (V), bewegt wird, und/oder wobei unmittelbar vor dem Einführen der Stromabnehmerkontakte (11) in die Stromschiene (7) der Stromabnehmerwagen (10) nach Abschluss der Zustellung in horizontaler Zustellrichtung (H) nur noch in vertikaler Zustellrichtung (V) zugestellt wird.

11. Verfahren nach Anspruch 9, **dadurch gekennzeichnet, dass** der Stromabnehmerwagen (10) zuerst in horizontaler Zustellrichtung (H) und dann in vertikaler Zustellrichtung (V) zugestellt wird.

12. Verfahren nach einem der Ansprüche 9 bis 11, **dadurch gekennzeichnet, dass** der Stromabnehmerwagen (10) in horizontaler Zustellrichtung (H) und/oder in vertikaler Zustellrichtung (V) erst langsam und dann schnell zugestellt und vor Ende der Zustellbewegung abgebremst wird, und/oder wobei die Position des Stromabnehmerwagens (10) in horizontaler Zustellrichtung (H) und/oder in vertikaler Zustellrichtung (V) über einen Lagegeber an einem Ausschubmotor (18) für die horizontale Zustellung des Stromabnehmerwagens (10) bzw. einen Lagegeber an einem Hubmotor (33) für die vertikale Zustellung des Stromabnehmerwagens (10) bestimmt wird.

## Claims

1. Current collector system (9) for a vehicle (2) capable of travelling along a live rail arrangement (4), with at least one current collector trolley (10) and current collector contacts (11) which are arranged thereon and can be connected to a live rail (7) of the live rail arrangement (4), and a vertical advance unit (29) for moving the current collector trolley (10) in a vertical advance direction (V), **characterised in that** the current collector trolley (10) can be moved in the vertical advance direction (V) by means of a belt drive (30, 31) with an elastic and/or flexible belt (34).

2. Current collector system (9) according to claim 1, **characterised in that** the belt drive exhibits two end rollers (30, 31) arranged at opposite ends of the vertical advance unit (14) in the vertical advance direction (V) around which the belt (34) runs, wherein the current collector trolley (10) is fastened to one side (34a) of the belt (34).

3. Current collector system (9) according to claim 1 or 2, **characterised in that** an energy chain (37) is provided on the vertical advance unit (14) to guide feed cables from the vehicle (2) to the current collector trolley (10) and/or to the vertical advance unit (14), one end of which is fastened to the current collector trolley (10) or to a fastening plate (36) for the current collector trolley (10) and the other end of which is fastened to a frame part (29) of the vertical advance unit.

4. Current collector system (9) according to one of the preceding claims, **characterised in that** a lifting motor (33) is provided to drive the belt (34).

5. Current collector system (9) according to claim 4, **characterised in that** the lifting motor (33) provides a holding force which holds the current collector trolley (10) in a desired vertical position and/or wherein the lifting motor (33) is provided with a position sensor to determine the position of the current collector trolley (10) in the vertical advance direction (V).

6. Current collector system (9) according to one of the preceding claims, **characterised in that** the belt is an open ended belt (34) the ends (34a, 34b) of which are held together by means of a clamping device (35).

7. Current collector system (9) according to claim 6, **characterised in that** the clamping device (35) clamps the ends (34a, 34b) of the belt (34) together so that at least one end (34a) of the belt (34) is released from the clamping device (35) when a predetermined force is exceeded, and/or wherein the current collector trolley (10) is fastened to the belt (34) by means of the clamping device (35).

8. Installation, in particular a crane installation, with a vehicle (2), in particular a crane (2), which is capable of travelling along a live rail arrangement (4), with at least one current collector system (9) with current collector trolleys (10) arranged thereon with current collector contacts (11) which can be connected to a live rail (7) of the live rail arrangement (4), **characterised in that** the current collector system (9) is embodied according to one of the preceding claims.

9. Method for advancing a current collector trolley (10) of a current collector system (9) according to one of claims 1 to 7, provided with current collector contacts (11) and arranged on a travelling vehicle (2), in particular a crane (2), to a live rail (7) of a live rail arrangement (4), in particular in an installation according to claim 8, whereby the current collector system (9) comprises a horizontal advance unit (14) with at least one advance element (17) which can be moved in a horizontal advance direction (H) for moving the current collector trolley (10) in the horizontal advance direction (H), the advance element (17) can be moved in the horizontal advance direction (H) by means of a belt drive (21, 22) with an elastic and/or flexible belt (22), **characterised in that** the current collector trolley (10) is advanced to the live rail (7) both in the horizontal advance direction (H) and in the vertical advance direction (V) by means of a positioning unit (14, 29).

10. Method according to claim 9, **characterised in that** the current collector trolley (10) is simultaneously moved in two spatial directions, in particular in the horizontal advance direction (H) and the vertical advance direction (V), and/or wherein immediately before the current collector contacts (11) are guided into the live rail (7), the current collector trolley (10) is still advanced in the vertical advance direction (V) after completion of the advance movement in the horizontal advance direction (H).

11. Method according to claim 9, **characterised in that** the current collector trolley (10) is advanced firstly in the horizontal advance direction (H) and then in the vertical advance direction (V).

12. Method according to one of claims 9 to 11, **characterised in that** the current collector trolley (10) is advanced in the horizontal advance direction (H) and/or in the vertical advance direction slowly at first and then rapidly and braked before the end of the advance movement, and/or wherein the position of the current collector trolley (10) in the horizontal advance direction (H) and/or in the vertical advance direction (V) is determined by means of a position sensor on a slide-out unit motor (18) for the horizontal advance movement of the current collector trolley (10) or a position sensor on a lifting motor (33) for the vertical advance movement of the current collector trolley (10).

## Revendications

1. Système collecteur de courant (9) pour un véhicule (2) déplaçable le long d'un ensemble de rail conducteur (4), avec au moins un chariot collecteur de courant (10) et des contacts collecteurs de courant (11) disposés dessus qui peuvent être reliés à un rail conducteur (7) de l'ensemble de rail conducteur (4), et une unité d'avance verticale (29) pour le déplacement du chariot collecteur de courant (10) dans un sens d'avance verticale (V), **caractérisé en ce que** le chariot collecteur de courant (10) peut être déplacé à l'aide d'un entraînement par courroie (30, 31) présentant une courroie (34) élastique et/ou flexible dans le sens d'avance verticale (V).

2. Système collecteur de courant (9) selon la revendication 1, **caractérisé en ce que** l'entraînement par courroie présente deux poulies de renvoi (30, 31) disposées sur des extrémités opposées dans le sens d'avance verticale (V) de l'unité d'avance verticale (29), autour desquelles la courroie (34) tourne, le chariot collecteur de courant (10) étant fixé sur un brin de traction (34a) de la courroie (34).

3. Système collecteur de courant (9) selon la revendication 1 ou 2, **caractérisé en ce que** pour le guidage de conduites d'amenée du véhicule (2) vers le chariot collecteur de courant (10) et/ou vers l'unité d'avance verticale (14), une chaîne énergétique (37) est prévue sur l'unité d'avance verticale (14), dont une extrémité est fixée sur le chariot collecteur de courant (10) ou une plaque de fixation (36) pour le chariot collecteur de courant (10) et l'autre extrémité sur une partie de cadre de l'unité d'avance verticale (29).

4. Système collecteur de courant (9) selon l'une quelconque des revendications précédentes, **caractérisé en ce qu'**un moteur de levage (33) est prévu pour l'entraînement de la courroie (34).

5. Système collecteur de courant (9) selon la revendication 4, **caractérisé en ce que** le moteur de levage (33) met à disposition une force de retenue qui maintient le chariot collecteur de courant (10) dans une position verticale souhaitée et/ou le moteur de levage (33) étant pourvu d'un capteur de position pour la détermination de la position du chariot collecteur de courant (10) dans le sens d'avance verticale (V).

6. Système collecteur de courant (9) selon l'une quelconque des revendications précédentes, **caractérisé en ce que** la courroie est une courroie à bout libre (34), dont les extrémités (34a, 34b) sont maintenues ensemble à l'aide d'un dispositif de serrage (35).

7. Système collecteur de courant (9) selon la revendication 6, **caractérisé en ce que** le dispositif de serrage (35) serre ensemble les extrémités (34a, 34b) de la courroie (34) de sorte qu'au moins une extrémité (34a) de la courroie (34) soit détachée du dispositif de serrage (35) lors du dépassement d'une force prescrite et/ou le chariot collecteur de courant (10) étant fixé par le dispositif de serrage (35) sur la courroie (34).

8. Installation, en particulier de grue, avec un véhicule (2) mobile le long d'un ensemble de rail conducteur (4), en particulier une grue (2) avec au moins un système collecteur de courant (9) présentant des chariots collecteurs de courant (10) disposés dessus avec des contacts collecteurs de courant (11) qui peuvent être reliés à un rail conducteur (7) de l'ensemble de rail conducteur (4), **caractérisée en ce que** le système collecteur de courant (9) est réalisé selon l'une quelconque des revendications précédentes.

9. Procédé d'avance d'un chariot collecteur de courant (10) pourvu de contacts collecteurs de courant (11), disposé sur un véhicule (2) mobile, en particulier une grue (2) d'un système collecteur de courant (9) selon l'une quelconque des revendications 1 à 7, vers un rail conducteur (7) d'un ensemble de rail conducteur (4), en particulier pour une installation selon la revendication 8, le système collecteur de courant (9) présente une unité d'avance horizontale (14) avec au moins un élément d'avance (17) mobile dans un sens d'avance horizontale (H) pour le déplacement du chariot collecteur de courant (10) dans le sens d'avance horizontale (H), l'élément d'avance (17) peut être déplacé par un entraînement par courroie (21, 22) présentant une courroie (22) élastique et/ou flexible dans le sens d'avance horizontale (H), **caractérisé en ce que** le chariot collecteur de courant (10) est avancé à l'aide d'une unité de positionnement (14, 29) non seulement dans le sens d'avance horizontale (H) mais aussi dans le sens d'avance verticale (V) vers le rail conducteur (7).

10. Procédé selon la revendication 9, **caractérisé en ce que** le chariot collecteur de courant (10) est simultanément déplacé dans deux sens spatiaux, en particulier dans les sens d'avance horizontale (H) et verticale (V) et/ou le chariot collecteur de courant (10) n'étant plus avancé que dans le sens d'avance verticale (V) peu avant l'introduction des contacts collecteurs de courant (11) dans le rail conducteur (7) à la fin de l'avance dans le sens d'avance horizontale (H).

11. Procédé selon la revendication 9, **caractérisé en ce que** le chariot collecteur de courant (10) est tout d'abord avancé dans le sens d'avance horizontale (H) puis dans le sens d'avance verticale (V).

12. Procédé selon l'une quelconque des revendications 9 à 11, **caractérisé en ce que** le chariot collecteur de courant (10) est avancé dans le sens d'avance horizontale (H) et/ou dans le sens d'avance verticale (V) tout d'abord lentement puis rapidement et est freiné avant la fin du mouvement d'avance et/ou la position du chariot collecteur de courant (10) étant déterminée dans le sens d'avance horizontale (H) et/ou dans le sens d'avance verticale (V) par un capteur de position sur un moteur d'extension (18) pour l'avance horizontale du chariot collecteur de courant (10) ou un capteur de position sur un moteur de levage (33) pour l'avance verticale du chariot collecteur de courant (10) .
